(19) Europäisches Patentamt
European Patent Office
Office européen des brevets

(11) EP 3 913 349 A1

(12) **EUROPÄISCHE PATENTANMELDUNG**

(43) Veröffentlichungstag:
24.11.2021 Patentblatt 2021/47

(51) Int Cl.:
*G01M 13/028* (2019.01)

(21) Anmeldenummer: 21000130.1

(22) Anmeldetag: 12.05.2021

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **22.05.2020 DE 102020003055**

(71) Anmelder: **Lenord, Bauer & Co. GmbH**
**46145 Oberhausen (DE)**

(72) Erfinder:
• **Danowski, Markus**
**45966 Gladbeck (DE)**

• **Nühnen, Klaus Peter**
**47178 Duisburg (DE)**
• **Stritzke, Burghard**
**45896 Gelsenkirchen (DE)**
• **Schuh, Andreas**
**40629 Düsseldorf (DE)**
• **Höller, Heinrich**
**47055 Duisburg (DE)**

(74) Vertreter: **Demski, Siegfried**
**Demski & Nobbe**
**Patentanwälte**
**Mülheimer Strasse 210**
**47057 Duisburg (DE)**

(54) **VERFAHREN ZUR ERMITTLUNG DER BELASTUNG EINER ANTRIEBSWELLE**

(57) Die Erfindung betrifft ein Verfahren zur Ermittlung der statischen und dynamischen Belastung einer Antriebswelle 1 in radialer und/oder axialer Richtung durch Auswertung von Messsignalen zumindest eines Sensors, der eine auf einer Antriebswelle angebrachte Maßverkörperung 6 zur Messung der Drehzahl oder der Position abtastet, wobei zur Minimierung des Messfehlers die Messdaten einer Referenzmessung bei geringen mechanischen Schwingungen der Antriebswelle 1 verwendet werden. Um die Messgenauigkeit zu erhöhen und die dynamische Belastung einer Antriebswelle 1 zu erfassen, erfolgt bei dem erfindungsgemäßen Verfahren die Korrelation der aufgenommenen Messsignale mit den Messdaten einer Referenzmessung oder Filterung der Messsignale durch ein Signalfilter und anschließender Berechnung der radialen und/oder axialen Abstandvariationen der Antriebswelle 1 zu den Sensoren. Aufgrund der Differenzbildung oder Filterung kann eine Fehlerkompensation erfolgen, die zu einer Messgenauigkeit von besser als $\pm$ 0,25 $\mu$m statisch und bis zu $\pm$ 0,05 $\mu$m dynamisch führt.

Figur 1

EP 3 913 349 A1

**Beschreibung**

Die Erfindung betrifft ein Verfahren zur Ermittlung der statischen und dynamischen Belastung einer Antriebswelle in radialer und/oder axialer Richtung durch Auswertung von Messsignalen zumindest eines Sensors, der eine auf einer Antriebswelle angebrachte Maßverkörperung zur Messung der Drehzahl oder der Position abtastet, wobei zur Minimierung des Messfehlers die Messdaten einer Referenzmessung bei geringen mechanischen Schwingungen der Antriebswelle verwendet werden.

In modernen Bearbeitungszentren werden Werkstücke mit hoher Präzision gefertigt, wobei die Arbeitsvorgänge weitestgehend automatisiert sind. Hinzu kommt, dass immer höhere Genauigkeiten bei der Bearbeitung von Werkstücken erzielt werden. Die Präzision liegt mittlerweile im Mikrometerbereich, sodass bereits kleinste Prozessverschlechterungen Auswirkungen auf die Qualität der Werkstücke haben. Die durch den Bearbeitungsprozess auf die Antriebswelle wirkenden Kräfte bewegen oder verformen die Antriebswelle, was zu mechanischen Schwingungen im System und zur Verschlechterung der Qualität des Werkstücks führt. Die dynamische Belastung einer Antriebswelle steigt durch höhere Belastungen an und kann gegebenenfalls zu einer Beschädigung der Antriebswelle oder deren Lagerung führen. Antriebswellen sind aus der heutigen Fertigungstechnik nicht mehr wegzudenken und werden insbesondere bei vollautomatischen Bearbeitungsmaschinen eingesetzt, die beispielsweise eine Drehzahlregelung und Positionsbestimmung der Welle über ihren Drehwinkel erfordern. Die in Bearbeitungszentren eingesetzten Hochfrequenz-Spindeln sind in der Regel mit magnetischen Drehgebern ausgestattet, die eine Maßverkörperung abtasten, welche direkt mit der Antriebswelle verbunden ist. Somit können mechanische Bewegungen, Schwingungen oder Resonanzen erfasst werden.

Die bekannten Systeme, welche gegenwärtig zur Verfügung stehen, benötigen meistens zusätzlich Sensoren zur Vibrations- und Wellenbewegungserfassung. Der hierzu notwendige additive Platzbedarf und der hohe Zusatzaufwand haben bisher eine Marktdurchdringung verhindert. Hinzu kommt, dass Systeme auf Basis der Auswertung von Amplitudenänderungen eine Messgenauigkeit der Wellenbewegung von $\pm 10 \mu m$ bis $\pm 1 \mu m$ erfassen. Verfügbare, genauere Systeme werden wegen ihres hohen zusätzliches Platzbedarfes und des hohen Justageaufwandes meist nur unter Laborbedingungen eingesetzt. Daher ist mit dem Stand der Technik beispielsweise eine Vibrationsmessung mit den bekannten Systemen bislang in der Praxis nicht möglich.

Aus der DE 100 29 965 A1 ist ein Verfahren und eine Vorrichtung zur berührungslosen Belastungsmessung einer rotierenden Spindel bekannt. Das Verfahren sieht hierbei vor, dass über eine Spindelumdrehung ohne Werkzeugbelastung eine Messsignalkurve erstellt und abgespeichert wird. Zur Korrektur aktueller Messwerte werden die abgespeicherten Messwerte abgezogen, sodass das Ausgangssignal ausschließlich der Spindelbelastung bzw. der Werkzeugbelastung entspricht.

Aus der DE 199 20 596 A1 ist ein Verfahren zum Messen der Relativlage zweier Objekte bekannt. Zur Messung der Relativlage zweier Objekte befindet sich an einem Objekt ein Teilungsträger, der von wenigstens zwei mit dem anderen Objekt verbundenen Leseköpfen abgetastet wird. Die erzeugten und digitalisierten Signale werden zur Ermittlung von mindestens zwei Positionswerten verwendet, die nach arithmetischer Ermittlung als korrigierter Positionswert in Form der korrigierten analogen Ausgangssignale erzeugt werden.

Soweit die bekannten Verfahren eine Korrektur der Messwerte berücksichtigen, erfolgt dies im Wesentlichen durch die Ermittlung von Messsignalen ohne Werkzeugbelastung, wobei die im Betrieb gemessenen Messsignale durch die früher ermittelten Messsignale kompensiert werden. Soweit während des Ermittelns der Lagesignale gleichzeitig Referenzwerte ermittelt werden, ist diese Vorgehensweise für die Korrektur eines Lagewinkels vorgesehen.

Der vorliegenden Erfindung liegt die Aufgabenstellung zugrunde, ein Verfahren aufzuzeigen, welches die Möglichkeit bietet, gegebenenfalls unter Verwendung bereits bestehender Sensoren oder zusätzlicher Sensoren die Genauigkeit der Messungen deutlich zu erhöhen und die dynamische Belastung einer Antriebswelle zu erfassen. Eine weitere Aufgabenstellung besteht darin, die Vibration einer Welle zu erfassen.

Zur Lösung der Verfahrensaufgabe ist herbei vorgesehen, dass eine statische und/oder kontinuierliche dynamische Ermittlung der Referenzwerte erfolgt und die Messsignale mit der Referenzmessung korreliert werden oder eine Filterung der Messsignale durch einen Signalfilter und anschließender Berechnung der radialen und/oder axialen Abstandsvariation der Antriebswelle zu dem wenigstens einen Sensor erfolgt. Vorteilhafte Ausgestaltungen des Verfahrens sind in den Unteransprüchen genannt.

Die bekannten Maßverkörperungen sind derart strukturiert, dass die Sensorelemente Sinus- und Cosinus-Signale ausgeben, die zur Erfassung einer sich durch die Belastung der Antriebswelle ergebenen Abstandsänderung zwischen Sensor und Welle eignen. Die Amplitude von Sinus- und Cosinus-Signalen ist abhängig vom Abstand zwischen Sensorelement und Maßverkörperung, wobei die Amplitude bei Vergrößerung des Abstandes bekanntlich sinkt. Durch Kenntnis einer fehlerbereinigten Amplitude kann somit die drehwinkelabhängige Abstandsänderung zwischen Maßverkörperung und Sensor sehr genau bestimmt werden, wodurch die Belastung der Antriebswelle durch die statische und dynamische Belastung ermittelt werden kann.

Durch den unmittelbaren Vergleich aktueller Ist-Werte mit einer vorherigen Referenzmessung bei demselben Drehwinkel und anschließender Differenzbildung wird hierbei eine Fehlerkompensation vorgenommen, die zu einer Messgenauigkeit von besser als 0,25 $\mu$m statisch und bis zu 0,05 $\mu$m dynamisch führen kann. Durch dieses Verfahren werden Messfehler, die durch mechanische und elektrische Toleranzen im Sensorsystem und durch die Strukturierungsqualität der Maßverkörperung entstehen, kompensiert. Die elektrischen Toleranzen der Sinus- und Cosinus-Signale können zudem einen Offsetfehler, Phasenfehler oder Fehler im Amplitudengleichlauf beinhalten. Die Exzentrizität der Maßverkörperung führt zu einer Abstandsänderung der Sensoren gegenüber der Maßverkörperung, welche sich periodisch mit der Umdrehung wiederholt. Durch diese Signalfehler entstehen Verzerrungen, die einen deutlichen Einfluss auf die Bestimmung der Abstandsänderung $\Delta l$ zwischen Antriebswelle und Sensor nehmen.

Unter Berücksichtigung weiterer systembedingter, reproduzierbarer Messsignalfehler kann die Änderung des Abstandes in jeder Winkelposition statisch und drehzahlabhängig mit einer hohen bisher nur mit aufwändigen Zusatzsystemen realisierbaren Genauigkeit durch das Verfahren bestimmt werden.

Der wesentliche Erfindungsgedanke besteht hierbei darin, dass die Auswertung von inkrementalen oder absoluten Encodersignalen mit einer permanenten Fehlerkorrektur und Korrelation mit einer Referenzmessung erfolgt. Die hierbei verwendeten Sensoren können optisch, magnetisch, induktiv oder mechanisch arbeiten und werden als Messsignalgeber verwendet, welche die aktuelle Position einer Antriebswelle ermitteln und als elektrisches Signal vorzugsweise ein Sinus- und Cosinus-Signal erzeugen. Hierbei existieren zwei Arten von Sensoren, beispielsweise rotatorische oder lineare Sensoren, wobei erstere als Drehgeber an rotierenden Bauteilen eingesetzt werden. Ebenso werden aber auch lineare Sensoren eingesetzt, wenn axiale Bewegungen überwacht werden müssen. Die Sensoren arbeiten hierbei mit Maßverkörperungen, die beispielsweise inkrementale, zu zählende oder aber absolute Maßverkörperungen in Form von Strichmustern besitzen. Alternativ kann durch Magnetisierung und Magnetfeldänderungen eine Signalerfassung erfolgen. Im Falle einer Dauermagnetisierung kann die Magnetfeldmodulation mittels AMR-, GMR-, TMR-, Hall-Sensoren oder induktiven Sensoren ausgewertet werden, wobei für inkrementale induktive Sensoren oft eine nichtmagnetische Zahnung ausreicht.

Die absolut messenden Sensoren arbeiten hingegen auf der Grundlage von Maßverkörperungen, die jeder Position ein eindeutiges Signalmuster zuordnen und sind als Absolutwertgeber bekannt. Die Ausgangssignale der Sensoren ermöglichen, eine reproduzierbare Bewegung der Antriebswelle zu ermitteln, wobei im Falle eines Absolutwertgebers auch nach einer Abschaltung der Bearbeitungsmaschinen eine genaue Ausgangspositionen bestimmbar ist. Die Inkrementalgeber benötigen hingegen in der Regel zum Aufsuchen einer Referenzposition einen zusätzlichen Geber, um den Startpunkt zu ermitteln.

Bei einem inkrementalen Messsystem mit magnetischer Abtastung besteht die Maßverkörperung aus einem hartmagnetischen Träger, in dem durch Magnetisierung eine Teilung erfolgt ist, beispielsweise ein Polrad oder ein Magnetband. Die typischen Teilungsperioden liegen zwischen 0,5 bis 5 mm, wobei aber auch größere Teilungen möglich sind. Das Lesen der magnetischen Codierung kann vorzugsweise durch Hall-Elemente oder magnetoresistive Sensoren erfolgen, wobei mit beiden unterschiedlichen Techniken ein berührungsloses Auslesen der Magnetisierung möglich ist. Der Vorteil der magnetischen Signalerfassung liegt hierbei darin, dass eine höhere Unempfindlichkeit gegenüber Schmutz vorliegt. Lediglich ferromagnetische Fremdkörper können hierbei Einfluss auf die Sensoren und Maßverkörperung nehmen.

Eine weitere Möglichkeit besteht darin, dass eine Verzahnung aus einem unmagnetisierten, ferromagnetischen Material abgetastet wird. Hierzu können Hallsensoren, magnetoresistive, kapazitive, optische oder induktive Sensorelemente verwendet werden.

Diese Sensoren liefern um 90 Grad phasenverschobene Signale, und zwar ein Sinus- und Cosinus-Signal. Bewegt sich die Maßverkörperung beispielsweise nach rechts, läuft das Signal vor beziehungsweise bei der entgegengesetzten Drehrichtung nach. Die vier unterschiedlichen Zustände der Signale wiederholen sich bei jedem Teilstrich der Maßverkörperung. Sie können mit 0 Grad, 90 Grad, 180 Grad und 270 Grad gekennzeichnet werden. Spezielle AB-Zähler ermitteln aus diesen beiden Signalen die Drehrichtung und zählen die Anzahl der Impulse, sodass direkt auf die Maßverkörperung geschlossen werden kann. Bei Sensoren, die ein sinusförmiges Signal erzeugen, kann eine Interpolation des gemessenen Signals erfolgen, welche eine deutliche Erhöhung der Auflösung ermöglicht. Diese Interpolation kann hierbei bereits in der Sensoreinheit erfolgen, da der Abstand zwischen Sensor und Auswerteschaltung möglichst gering sein sollte, um das Einfangen von Störungen zu vermeiden. Wird ein Inkrementalgeber beispielsweise in einem Servomotor eingesetzt, verfügt er in der Regel noch über zusätzliche Spuren für Kommutierungssignale, aus denen absolute Winkel direkt nach dem Einschalten ermittelt werden kann. Diese Kommutierungssignale können beispielsweise analog aus um 90 Grad versetzten Sinus- beziehungsweise Cosinus-Signalen bestehen oder aus Teilkreisen bei der Blockkommutierung.

Ein Inkrementalgeber misst nach Zuschalten der Spannungsversorgung nur Änderungen gegenüber der ursprünglichen Einschaltposition. Viele Anwendungen erfordern aber die Kenntnis der absoluten Position, deshalb geben die meisten Winkelmessgeräte einen Referenzimpuls einmal pro Umdrehung aus. Daher muss der Geber nach dem Einschalten solange gedreht werden, bis der Referenzimpuls erkannt wurde. Spätestens nach einer Umdrehung steht der absolute Winkel zur Verfügung.

Durch die Auswertung von inkrementalen oder absoluten Encodersignalen mit einer permanenten Fehlerkorrekturberechnung und Bildung der Korrelation mit den Positions- oder Drehwinkeldaten einer Referenzmessung kann eine hohe Genauigkeit erzielt werden. Hierzu ist es unabwendbar, dass ein positions- oder winkelabhängiger Referenzwert über eine Messlänge bei axialer Belastung oder einer vollständigen Umdrehung bei einer Rotationsbelastung erfasst wird. Aus der Korrelation des positionsabhängigen Weg- oder Winkelmesswertes in analoger oder digitaler Form des Encodersignals mit dem Referenzwert lässt sich eine Auswertung der räumlichen Veränderungen vornehmen, und damit kann ein Rückschluss auf die mechanische Belastung der Antriebswelle erfolgen.

Die Bestimmung des Korrekturwertes kann hierbei wie folgt hergeleitet werden:

Aus dem Einheitskreis ergibt sich, dass $\sin^2 + \cos^2 = 1$ ist.

Für ideale Sinus- und Cosinussignale mit gleicher Amplitude $\hat{U}$ kann man einen Wert $V$ definieren:

$$V(\alpha) = \left(\hat{U}\sin(\alpha)\right)^2 + \left(\hat{U}\cos(\alpha)\right)^2$$

Aus dem Einheitskreis ist ersichtlich, dass das Wert $V = \hat{U}^2 =$ konstant ist und somit unabhängig vom Winkel $\alpha$. Des Weiteren folgt direkt:

$$\hat{U} = \sqrt{V(\alpha)} \qquad \text{(Formel 1)}$$

Zwischen Abstand $l$ und Amplitude $\hat{U}$ besteht bei magnetischen Sensorsystemen zumeist ein umgekehrt proportionaler Zusammenhang:

$$\hat{U}(\alpha) = \frac{c}{l(\alpha)} + K \qquad \text{(c und K sind systemspezifische Konstanten)}$$

Löst man die Gleichung nach dem Abstand $l$ und setzt Formel 1 ein, ergibt sich:

$$l(\alpha) = \frac{c}{\sqrt{V(\alpha)} - K} \qquad \text{(Formel 2)}$$

**Näherung für kleine Abstandsänderungen**

Annahme: Für kleine Abstandsänderungen $\Delta l$ zwischen Sensor und Zahnrad ändert sich die Amplitude $\hat{U}(l)$ der Spursignale linear mit der Empfindlichkeit e. Die Änderungen durch Offset und Phasenfehler sind vernachlässigbar.

Dann gilt:

$$\hat{U}(l_0 + \Delta l) = \hat{U}(l_0) + \Delta l \, e$$

$$\Leftrightarrow \Delta l = \frac{\hat{U}(l_0 + \Delta l) - \hat{U}(l_0)}{e}$$

Durch Einsetzten von Formel 1 ergibt sich die Abstandsänderung $\Delta l$ in Abhängigkeit des Wert $V$ zu:

$$\Delta l = \frac{\sqrt{V(l_0 + \Delta l)} - \sqrt{V(l_0)}}{e} \qquad \text{(Formel 3)}$$

Eine weitere Berechnungsmöglichkeit besteht durch:

$$U_0(\alpha) = \hat{U_0}\sin(\alpha)$$

$$U_1(\alpha) = (\widehat{U_0} + \Delta l\, e)\, \sin(\alpha)$$

$$\Rightarrow \Delta l = (\frac{U_1(\alpha)}{U_0(\alpha)} - 1)\frac{\widehat{U_0}(\alpha)}{e}$$

Um die Abstandsänderungen der belasteten Welle zwischen Maßverkörperung und Sensor in einer gewünschten Qualität detektieren zu können, müssen die Signalfehler in Form von mechanischen und elektrischen Toleranzen sowie Signalverzerrungen korrigiert oder durch Korrelation des unbelasteten V-Signals zum belasteten V-Signal eliminiert werden.

Die Verzerrung des V-Wertes ist in einem hohen Maße reproduzierbar, wobei eine absolute Position der Maßverkörperung den Drehwinkel der Welle bestimmt.

Durch die Differenzbildung zwischen belastenden und unbelasteten V-Werten beispielsweise für jeden Drehwinkel werden die positionsabhängigen Signalverzerrungen kompensiert und kleinste Abstandsänderungen sichtbar. Nach erfolgter Korrelation der ermittelten Werte können auf diese Weise sehr genaue Abstandswerte zwischen Maßverkörperung und Sensor ermittelt werden, die eine Aussage über die Beanspruchung der Antriebswelle durch eine Verformung ermöglichen.

Alternativ besteht die Möglichkeit, die Auswertung ab einer bestimmten Drehzahl durch Filterung der Sinus- und Cosinus-Signale vorzunehmen. Die Signalfrequenz ist abhängig von der Drehzahl.

$$f_{Sinus} = \text{Periodenzahl x Drehzahl}$$

Liegen die mechanischen Schwingungen der Antriebswelle deutlich unter dieser Frequenz, so können die Verzerrungen des Wertes V durch einen geeigneten Tiefpassfilter bereinigt werden. In diesem Falle kann eine deutlich niedrigere Anzahl an Referenzpunkten gegebenenfalls auch nur ein einzelner Referenzpunkt für den unbelasteten Wert $V_{(I0)}$ genutzt werden.

Durch zumindest zwei, vorzugsweise vier Referenzpunkte kann ferner die Vibration der Antriebswelle festgestellt werden, weil die Bewegung einer Antriebswelle in zwei Richtungen erfasst wird. Die Referenzpunkte werden hierbei vorzugsweise bei 0 Grad und 180 Grad oder bei 0 Grad, 90 Grad, 180 Grad und 270 Grad gewählt, wobei durch eine Auswertung der Messsignale und Differenzbildung zwischen belasteten und unbelasteten V-Wert für jeden Drehwinkel die Berechnung der Abstandsvariation erfolgt und

$$V_{(\alpha)} = (\widehat{U} \sin(\alpha))^2 + (\widehat{U} \cos(\alpha))^2$$

ist.

In Ausgestaltung des Verfahrens ist hierbei vorgesehen, dass die Sensoren ein winkel- oder positionsabhängiges und ein abstandsabhängiges Messsignal erzeugen. Soweit ein winkelabhängiges Messsignal ermittelt wird, erfolgt eine Überwachung einer sich drehenden Antriebswelle. Ein positionsabhängiges Messsignal wird zusätzlich erfasst, um die Längenkontraktion der Antriebswelle festzustellen. Auf diese Weise können somit die radialen und/oder axialen Abstandsvariationen der Antriebswelle sicher ermittelt werden.

Von großer Bedeutung ist hierbei, dass eine statische oder dynamische Ermittlung der Referenzweite erfolgt. Hierbei kann es sich beispielsweise um die Messung der Referenzwerte durch einen Umlauf der Antriebswelle handeln, die anschließend zur Korrelation mit den belasteten Werten herangezogen wird. Es besteht aber darüber hinaus die Möglichkeit, dass ein Referenzwert bei jeder Umdrehung dynamisch ermittelt wird und ebenso durch Korrelation mit den aufgenommenen Messsignalen zu einem sehr genauen Ergebnis führt. Damit ist sowohl die statische als auch die dynamische Ermittlung der Referenzwerte möglich und kann individuell je nach Anwendungsfall eingesetzt werden.

Besonders vorteilhaft ist hierbei, dass eine zusätzliche Auswertung der Messsignale von vorhandenen Sensoren für die Drehzahlregelung oder Positionierung einer Antriebswelle verwendet werden können. Somit werden keine weiteren Sensoren benötigt, sondern die bereits vorhandenen Sensoren reichen zur Ermittlung der Referenzwerte und ebenso zur Ermittlung der Ist-Werte aus, um durch Korrelation beider Messsignale zu einer sehr genauen Ermittlung der Abstandsveränderung zwischen den Sensoren und der Antriebswelle zu gelangen, die eine Aussage über die Belastung der Antriebswelle ermöglicht. Um eine höhere Genauigkeit zu erzielen oder unabhängig von vorhandenen Sensoren für die Drehzahlregulierung oder Positionierung einer Antriebswelle zu sein, kann alternativ die Auswertung der Messsignale von weiteren auf einem Kreisumfang positionierten Sensoren erfolgen.

Besonders vorteilhaft ist, dass eine Auswertung von inkrementalen oder absoluten Encodersignalen mit einer permanenten Fehlerkorrektur und Korrelation mit der Referenzmessung möglich ist. Hierdurch wird eine sofortige Erfassung der Belastungen einer Antriebswelle möglich, weil durch die permanente Fehlerkorrektur die erforderlichen Messsignale mit höchster Genauigkeit ermittelt und damit die Belastung festgestellt werden kann. Dies gilt ebenso für die Vibrationsmessung, wenn zumindest zwei Sensoren verwendet werden.

Zur Positionsbestimmung der Antriebswelle kann im weiteren vorgesehen sein, dass zumindest ein Referenzpunkt verwendet wird, um die Anzahl der Umdrehungen festzustellen. Alternativ besteht die Möglichkeit, dass zwei, drei oder vier Referenzpunkte verwendet werden, welche zueinander auf dem Kreisumfang versetzt sind. Hierbei erfolgt eine Auswertung der Messsignale und Differenzbildung zwischen belasteten und unbelasteten V-Wert für jeden Drehwinkel zur Berechnung der Abstandsvariation, wobei $V(\alpha) = (U^{\wedge}\sin(\alpha))2 + (U^{\wedge}\cos(\alpha))2$ ist.

Alternativ besteht die Möglichkeit, dass eine Filterung der Sinus-Cosinus-Signale bei geringen mechanischen Schwingungen der Antriebswelle durch ein Tiefpassfilter erfolgt, um auf diese Weise eine Korrektur der ermittelten Messsignale vorzunehmen.

Die Auswertung der Messingale kann beispielsweise über eine externe Datenauswertung oder über eine Datenauswertung unmittelbar im Sensor erfolgen. Hierbei ist insbesondere vorgesehen, dass die Berechnung der Abstandsänderung der Welle von zumindest einem Sensor in Echtzeit erfolgt, um eine zeitnahe Belastung der jeweiligen Antriebswelle zu ermitteln.

Als Maßverkörperung für das Verfahren können beispielsweise Zahnräder, Polräder, eine Stegscheibe, eine Exzenterscheibe oder ein Diametralmagnet mit den entsprechenden Sensoren verwendet werden. Die Abtastung der Maßverkörperung erfolgt mit Sensoren in Form von Hall-, XMR-, AMR-, GMR-, TMR-, optischen, induktiven, kapazitiven oder Resolver-Sensoren, wobei mindestens zwei phasenversetzten Sinus- und Cosinus-Signale erzeugt werden.

Der vorliegenden Erfindung liegen somit die Vorteile zugrunde, bereits vorhandene Sensoren für die Ermittlung einer rotations- oder translatorischen Bewegung in Form von Inkrementalgebern oder Absolutgebern zu verwenden und durch eine entsprechende Fehlerkorrektur, wie durch das Verfahren aufgezeigt, die Genauigkeit für eine Abstandsmessung zwischen der Maßverkörperung und den Sensoren deutlich zu erhöhen. Dies erfolgt durch Differenzbildung der gemessenen Werte und eines Referenzwertes. Hierdurch kann die Genauigkeit auf 0,25 μm statisch und 0,05 μm dynamisch erhöht werden. Das Maß der Abstandsänderungen dient hierbei als Aussagekriterium für die Belastung einer Antriebswelle.

Die Erfindung wird im Weiteren anhand der Figuren nochmals erläutert.

Es zeigt

Fig. 1    in einer Seitenansicht eine Welle mit Drehzahlsensor sowie in einer zeichnerischen Darstellung das untere Ende der Antriebswelle mit Drehzahlsensor,

Fig. 2    den typischen Signalverlauf eines Sinussignals in Abhängigkeit von einem Luftspalt,

Fig. 3    in einer perspektivischen Ansicht eine Antriebswelle mit Sensorelement sowie in einer zeichnerischen Darstellung das Ende der Antriebswelle mit Sensorelement,

Fig. 4    die Verzerrung des V-Wertes bei vorliegenden Sinus- und Cosinus-Signalen und

Fig. 5    in einer Skizze den dynamischen Rundlauf einer Antriebswelle im Idealfall und unter Belastung.

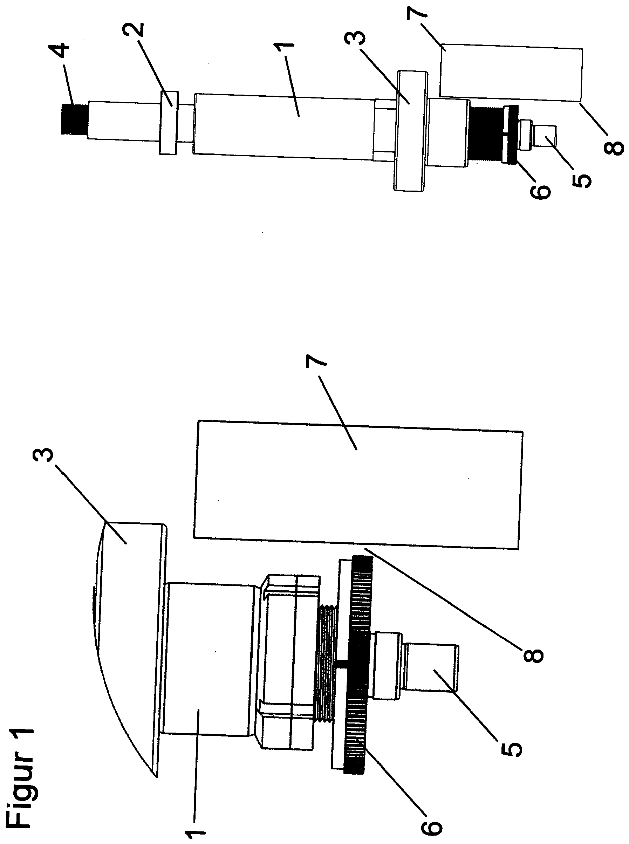

Figur 1 zeigt in einer Seitenansicht eine Antriebswelle 1 mit einem ersten Lagerelement 2 und einem zweiten Lagerelement 3. Das Ende 4 der Antriebswelle 1 wird hierbei zum Abtrieb verwendet. Das zweite Ende 5 dient zum Antrieb der Antriebswelle 1, wobei auf diesem Ende eine Maßverkörperung 6 in Form einer Verzahnung vorhanden ist. Die Maßverkörperung 6 ist unmittelbar mit der Antriebswelle 1 drehfest verbunden, sodass mithilfe einer Sensoreinheit 7 vorzugsweise Sinus- und Cosinus-Signale gemessen werden können. Zwischen der Sensoreinheit 7 und der Maßverkörperung 6 liegt ein Luftspalt 8 vor, welcher im Normalfall nur durch vorhandene mechanische Toleranzen eine Änderung erfährt. Bei einer Belastung der Antriebswelle 1 mit einer hieraus resultierenden Verformung der Antriebswelle 1 kann sich der Luftspalt 8 jedoch unabhängig von vorhandenen Toleranzen verändern. Diese Veränderungen sollen durch das erfindungsgemäße Verfahren ermittelt werden, um einen Aufschluss über die Belastung der Antriebswelle 1 zu erreichen.

Die zeichnerische Darstellung zeigt ebenfalls die Antriebswelle 1 mit dem zweiten Lagerelement 3, wobei das Ende 5 zum Antrieb der Antriebswelle 1 vorgesehen ist. Dem Ende 5 ist die Maßverkörperung 6 zugeordnet, welche aus einer Verzahnung besteht, wobei der Maßverkörperung 6 gegenüberliegend die Sensoreinheit 7 angeordnet ist. Zwischen Sensoreinheit 7 und Maßverkörperung 6 befindet sich der Luftspalt 8, welcher sich aufgrund von Maßtoleranzen der Antriebswelle bei einer Drehbewegung der Antriebswelle 1 verändern kann. Eine weitere Veränderung tritt immer dann ein, wenn eine Belastung der Antriebswelle 1 vorliegt und durch die eintretende Verformung eine zusätzliche Veränderung des Luftspaltes 8 erfolgt.

Das erfindungsgemäße Verfahren sieht hierbei vor, dass eine Ermittlung von Referenzwerten entweder bei einem ersten Rundlauf der Antriebswelle 1 erfolgt oder dynamisch bei jeder Umdrehung, während der laufenden Bewegung der Antriebswelle 1. Dieser Referenzwert wird in Relation zu den gemessenen Werten während einer Belastung der Antriebswelle 1 gesetzt, sodass die Differenz zu einer exakten Auswertung der Spaltveränderung führt und damit Rückschlüsse auf die Belastung der Antriebswelle 1 möglich sind. Das gezeigte Ausführungsbeispiel ermöglicht die Erfassung einer Veränderung des Luftspaltes bei einer drehenden Bewegung der Antriebswelle 1.

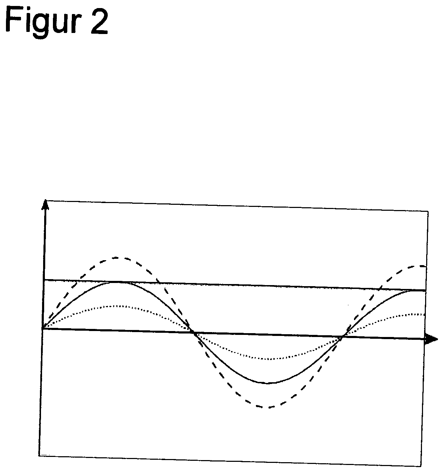

Figur 2 zeigt den typischen Signalverlauf in Form eines Sinussignals, wobei die durchgezogene Linie die normale Signalamplitude aufzeigt, während die gestrichelte Linie den Signalverlauf bei einem geringen Luftspalt aufzeigt und die punktierte Linie den Signalverlauf bei einem größeren Luftspalt. Die Veränderungen des Luftspaltes, welche durch mechanische Toleranzen bestimmt sind sowie durch Belastungen der Antriebswelle 1 entstehen, können unter Bestimmung eines Referenzwertes und einer Korrelation des Referenzwertes mit gemessenen Werten zu einer genauen Analyse des vorhandenen Luftspaltes genutzt werden, um die Belastung der Antriebswelle 1 festzustellen.

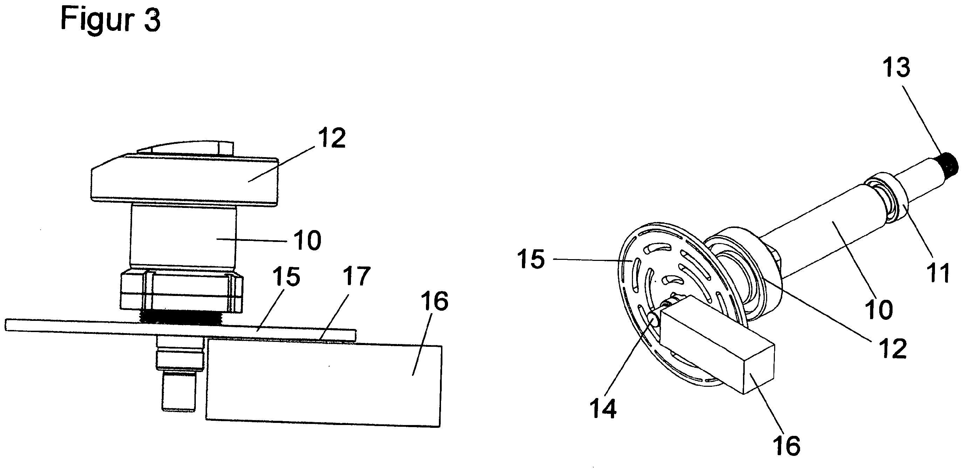

Figur 3 zeigt in einer perspektivischen Ansicht ein Ausführungsbeispiel zur Erfassung der axialen Bewegung einer Antriebswelle 10, welche wiederum über ein erstes Lagerelement 11 und ein zweites Lagerelement 12 gelagert ist, wobei ein erstes Ende 13 zum Abtrieb verwendet wird und ein zweites Ende 14 zum Antrieb der Antriebswelle 10. Das antriebsseitige Ende 14 ist mit einer Maßverkörperung 15 ausgestattet, welche in diesem Fall aus einer Lochscheibe besteht, welcher eine Sensoreinheit 16 gegenüber liegt.

Aus der zeichnerischen Darstellung des Endbereiches der Antriebswelle 10 wird die Position der Sensoreinheit 16 gegenüber der Maßverkörperung 15 nochmals deutlich. Zwischen Maßverkörperung 15 und Sensoreinheit 16 befindet sich ein Luftspalt 17. Der Luftspalt 17 ändert sich hierbei aufgrund mechanischer Toleranzen der Antriebswelle 10 und deren Lagerelementen 11, 12 sowie baulicher Ungenauigkeiten der Maßverkörperung 15. Bei einer Belastung der Antriebswelle 10 tritt eine Veränderung des Luftspaltes 17 ein. Unter Anwendung des erfindungsgemäßen Verfahrens kann eine Korrelation zwischen den Referenzwerten einer Umdrehung der Antriebswelle 10 und den gemessenen Werten erfolgen, sodass die sich hieraus ergebende Veränderung des Luftspaltes 17 ein Maß für die Belastung der Antriebswelle 10 ist.

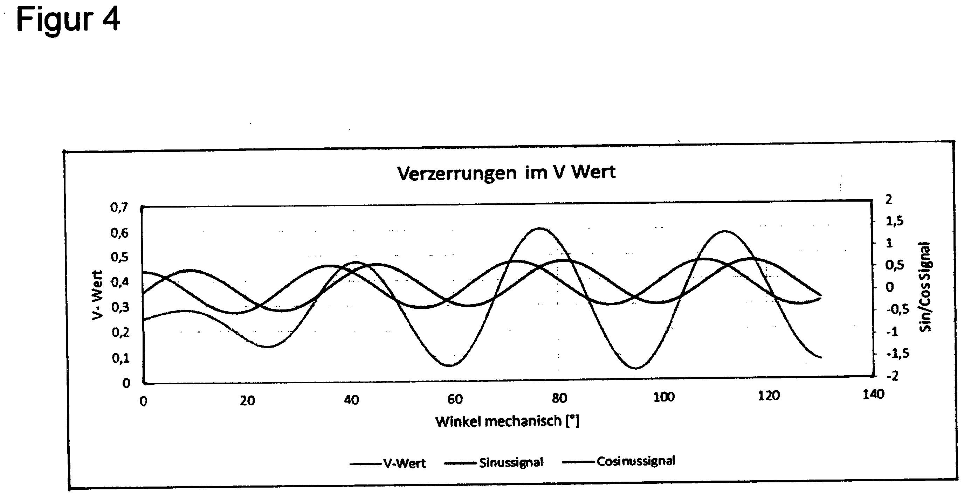

Figur 4 zeigt das durch die Sensoreinheit 7, 16 ermittelte Signal der Sinus- und Cosinus-Signale und den Verlauf des V-Wertes mit entsprechenden Verzerrungen, welche sich durch eine Veränderung des Luftspaltes gemäß dem ersten Ausführungsführungsbeispiel und dem zweiten Ausführungsbeispiel ergeben.

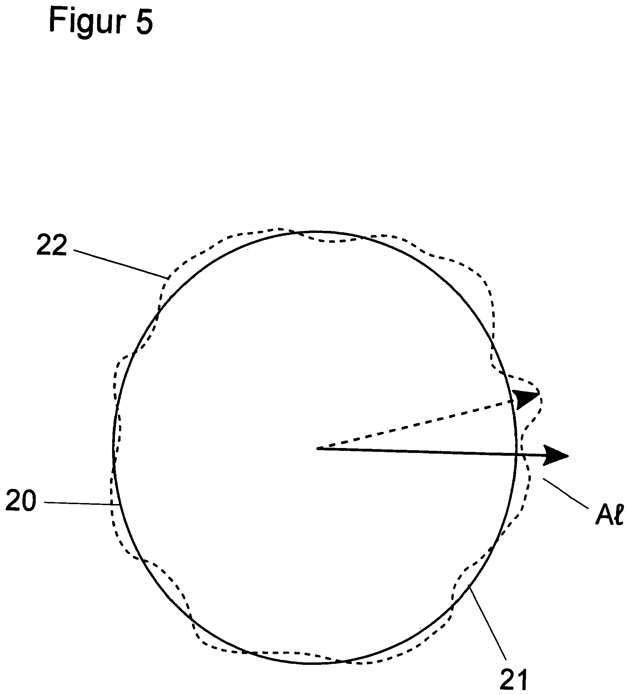

Figur 5 zeigt in einer skizzierten Darstellung die Änderung des Luftspaltes über einen Verlauf von 360 Grad, welcher bei geringen Toleranzen im Idealfall einen gleichbleibenden Luftspalt 20 zur Sensoreinheit ergeben sollte, welche durch den Kreis 20 symbolisiert ist. Durch vorhandene Bauteiltoleranzen und Messfehler ergibt sich jedoch ein Referenzwert 22, welcher bei einem Umlauf der Antriebswelle ermittelt werden kann, um eine Korrelation zwischen dem Referenzwert und den gemessenen Werten vorzunehmen. Vorhandene Abweichungen $\Delta l$ gegenüber dem Referenzwert 22 werden durch eine Veränderung des Luftspaltes 20 bewirkt und ermöglichen somit Rückschlüsse auf die Belastung der Antriebswelle gemäß beider Ausführungsbeispiele.

**Bezugszeichenliste**

| | |
|---|---|
| 1 | Antriebswelle |
| 2 | Lagerelement |
| 3 | Lagerelement |
| 4 | Ende |
| 5 | Ende |
| 6 | Maßverkörperung |
| 7 | Sensoreinheit |
| 8 | Luftspalt |
| 10 | Antriebswelle |
| 11 | Lagerelement |
| 12 | Lagerelement |
| 13 | Ende |
| 14 | Ende |
| 15 | Maßverkörperung |
| 16 | Sensoreinheit |
| 17 | Luftspalt |
| 20 | Kreis |
| 22 | Referenzwert |

**Patentansprüche**

1. Verfahren zur Ermittlung der statischen und dynamischen Belastung einer Antriebswelle (1, 10) in radialer und/oder axialer Richtung durch Auswertung von Messsignalen zumindest eines Sensors, der eine auf einer Antriebswelle angebrachte Maßverkörperung (6, 15) zur Messung der Drehzahl oder der Position abtastet, wobei zur Minimierung des Messfehlers die Messdaten einer Referenzmessung bei geringen mechanischen Schwingungen der Antriebswelle (1, 10) verwendet werden,
**dadurch gekennzeichnet,**
**dass** eine statische und/oder kontinuierliche dynamische Ermittlung der Referenzwerte (22) erfolgt und die Messsignale mit der Referenzmessung korreliert werden oder eine Filterung der Messsignale durch einen Signalfilter und anschließender Berechnung der radialen und/oder axialen Abstandsvariation der Antriebswelle (1, 10) zu dem wenigstens einen Sensor erfolgt.

2. Verfahren nach Anspruch 1,
**dadurch gekennzeichnet,**
**dass** die Vibration der Antriebswelle (1, 10) durch zumindest zwei Messsignale unter Berücksichtigung der Referenzmessung ermittelt wird.

3. Verfahren nach Anspruch 1 oder 2,
**dadurch gekennzeichnet,**
**dass** die Sensoren ein winkel- oder positionsabhängiges und abstandsabhängiges Messsignal erzeugen.

4. Verfahren nach einem der Ansprüche 1, 2 oder 3,
**dadurch gekennzeichnet,**
**dass** eine Auswertung der Messsignale von vorhandenen Sensoren für die Drehzahlregelung oder Positionierung einer Antriebswelle (1, 10) erfolgt.

5. Verfahren nach einem der Ansprüche 1 bis 4,
**dadurch gekennzeichnet,**
**dass** eine Auswertung der Messsignale von weiteren auf einem Kreisumfang positionierten Sensoren erfolgt.

6. Verfahren nach einem der Ansprüche 1 bis 5,
**dadurch gekennzeichnet,**
**dass** die Auswertung von inkrementalen oder absoluten Encodersignalen mit einer permanenten Fehlerkorrektur durch Korrelation mit der Referenzmessung erfolgt.

7. Verfahren nach einem der Ansprüche 1 bis 6,
**dadurch gekennzeichnet,**
**dass** die Auswertung der Messsignale über eine externe Datenauswertung oder eine Datenauswertung im Sensor erfolgt.

8. Verfahren nach einem der Ansprüche 1 bis 7,
**dadurch gekennzeichnet,**
**dass** die Berechnung der Abstandsänderung der Antriebswelle (1, 10) von zumindest einem Sensor in Echtzeit erfolgt.

9. Verfahren nach einem der Ansprüche 1 bis 8,
**dadurch gekennzeichnet,**
**dass** zumindest ein Referenzpunkt für die Drehbewegung der Antriebswelle (1, 10) verwendet wird.

10. Verfahren nach einem der Ansprüche 1 bis 9,
**dadurch gekennzeichnet,**
**dass** zwei, drei oder vier Referenzpunkte, welche zueinander auf dem Kreisumfang versetzt sind, verwendet werden.

11. Verfahren nach einem der Ansprüche 1 bis 10,
**dadurch gekennzeichnet,**
**dass** eine Auswertung der Messsignale und Differenzbildung zwischen belasteten und unbelasteten V-Wert für jeden Drehwinkel zur Berechnung der Abstandsvariation erfolgt, wobei $V_{(\alpha)} = (\hat{U} \sin (\alpha))^2 + (\hat{U} \cos (\alpha))^2$ ist.

**12.** Verfahren nach einem oder mehreren der Ansprüche 1 bis 11,
**dadurch gekennzeichnet,**
**dass** eine Filterung der Sinus-Cosinus-Signale bei geringen mechanischen Schwingungen der Antriebswelle (1, 10) durch ein Tiefpassfilter erfolgt ist.

**13.** Verfahren nach einem oder mehreren der Ansprüche 1 bis 12,
**dadurch gekennzeichnet,**
**dass** eine Maßverkörperung (6, 15) in Form eines Zahnrades, Polrades, einer Stegscheibe, Exzenterscheibe oder einem Diametralmagnet vorliegt.

**14.** Verfahren nach einem oder mehreren der Ansprüche 1 bis 13,
**dadurch gekennzeichnet,**
**dass** eine Abtastung der Maßverkörperung (6, 15) mit einem Sensor in Form von Hall-, XMR-, AMR-, GMR-, TMR-, optischen, induktiven, kapazitiven oder Resolver-Sensoren erfolgt, welche mindestens zwei phasenversetzte Sinus- und Cosinus-Signale erzeugen.

Figur 1

# Figur 2

# Figur 3

EP 3 913 349 A1

# Figur 4

Verzerrungen im V Wert

V- Wert

Sin/Cos Signal

Winkel mechanisch [°]

——— V-Wert  ——— Sinussignal  ——— Cosinussignal

EP 3 913 349 A1

# Figur 5

**Europäisches Patentamt**
**European Patent Office**
**Office européen des brevets**

# EUROPÄISCHER RECHERCHENBERICHT

**Nummer der Anmeldung**

EP 21 00 0130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/184590 A1 (TAKAHASHI EIJI [JP] ET AL) 20. Juni 2019 (2019-06-20) * Abbildungen 1,13 * ----- | 1-14 | INV. G01M13/028 |
| X | US 2018/318991 A1 (CIGADA ALFREDO [IT] ET AL) 8. November 2018 (2018-11-08) * Abbildungen 1,13 * ----- | 1,2 | |
| X | US 2017/322118 A1 (SPERLING ROLAND [DE] ET AL) 9. November 2017 (2017-11-09) * Abbildung 2 * ----- | 1 | |
| X,P | CN 112 775 719 A (OKUMA MACHINERY WORKS LTD) 11. Mai 2021 (2021-05-11) * Zusammenfassung; Abbildung 1 * ----- | 1 | |

**RECHERCHIERTE SACHGEBIETE (IPC)**

G01M

Der vorliegende Recherchenbericht wurde für alle Patentansprüche erstellt

| Recherchenort | Abschlußdatum der Recherche | Prüfer |
|---|---|---|
| Den Haag | 5. Oktober 2021 | Vytlacilová, Lenka |

**ANHANG ZUM EUROPÄISCHEN RECHERCHENBERICHT
ÜBER DIE EUROPÄISCHE PATENTANMELDUNG NR.**

EP 21 00 0130

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2021

| Im Recherchenbericht angeführtes Patentdokument | Datum der Veröffentlichung | Mitglied(er) der Patentfamilie | Datum der Veröffentlichung |
|---|---|---|---|
| US 2019184590 A1 | 20-06-2019 | CN 109070371 A<br>EP 3441206 A1<br>JP 6639014 B2<br>JP 2017217745 A<br>US 2019184590 A1<br>WO 2017212881 A1 | 21-12-2018<br>13-02-2019<br>05-02-2020<br>14-12-2017<br>20-06-2019<br>14-12-2017 |
| US 2018318991 A1 | 08-11-2018 | AU 2015405004 A1<br>CN 108025423 A<br>EP 3328589 A1<br>US 2018318991 A1<br>WO 2017021984 A1 | 08-02-2018<br>11-05-2018<br>06-06-2018<br>08-11-2018<br>09-02-2017 |
| US 2017322118 A1 | 09-11-2017 | AU 2015340502 A1<br>AU 2021203229 A1<br>CA 2964231 A1<br>CN 106922171 A<br>EP 3213046 A1<br>US 2017322118 A1<br>WO 2016066212 A1<br>WO 2016066819 A1 | 27-04-2017<br>10-06-2021<br>06-05-2016<br>04-07-2017<br>06-09-2017<br>09-11-2017<br>06-05-2016<br>06-05-2016 |
| CN 112775719 A | 11-05-2021 | CN 112775719 A<br>DE 102020213960 A1<br>JP 2021076450 A<br>US 2021140853 A1 | 11-05-2021<br>12-05-2021<br>20-05-2021<br>13-05-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10029965 A1
- DE 19920596 A1